# EUROPEAN PATENT SPECIFICATION

(11) **EP 2 520 902 B1**
(45) Date of publication and mention of the grant of the patent: **15.07.2015**
(21) Application number: 11162466.4
(22) Date of filing: 14.04.2011
(51) Int. Cl.: G01C 21/00, G01C 21/28

(54) **Determining a position of a navigation device**
Bestimmung einer Position einer Navigationsvorrichtung
Détermination d'une position d'un dispositif de navigation

(43) Date of publication of application: 07.11.2012
(73) Proprietor: Harman Becker Automotive Systems GmbH, 76307 Karlsbad (DE)
(72) Inventor: A. Radner, Markus, 81373 München (DE)
(74) Representative: Bertsch, Florian Oliver

(56) References cited:
- JP-A- 2011 069 790
- US-A1- 2005 107 953
- US-A1- 2007 018 811

## Description

The present invention relates to a method for determining a position of a navigation device, and to a corresponding navigation device using the method.

### Related Art

Navigation systems or navigation devices for guiding a user from a starting position, for example a current position of the user, to a destination position are well-known in the art. After having calculated a route from the starting position to the destination position, a current position of the user is determined and based on this current position and the calculated route guidance information may be output to the user by optical and/or acoustical means. For example, a map indicating the current position of the user and the calculated route may be displayed on a display of the navigation device. For determining the guidance information and for detecting, if the user is deviating from the calculated route, an accurate determination of the current position of the user is required. Therefore, especially when the navigation device is installed in a vehicle, the navigation device determines the current position from a plurality of information sources, for example from a satellite based global positioning system like GPS or Galileo, from radio based mobile telecommunications networks, and from telemetric data of the vehicle like tachometer data or speed data. However, there are a lot of situations in which an accurate determination of the current position is difficult, as the provided positioning information from the different sources may be contradictorily or inaccurately. For example, in street canyons of big cities, a positioning signal from a satellite may be inaccurate due to reflexions or due to a disturbed reception. Furthermore, on roads having a plurality of lanes it may be difficult to decide on which lane the vehicle is moving. However, this may be important to guide a driver of the vehicle on the correct lane when the driver has to take a specific exit for following the calculated route.

JP 2011 069790 A relates to a navigation system, terminal device, navigation server, navigation device and navigation method. In the navigation server, a position control parameter for selection and control of a proper positioning means by the terminal device in the range in map data shown by positioning range information is generated and the map data, the positioning control parameter and the positioning range information are transmitted to the terminal device. In the terminal device, the map data being received is output and the positioning means is switched over on the basis of the positioning control parameter within the range shown by the positioning range information corresponding to the received positioning control parameter.

US 2005/0107953 A1 relates to a method for determining the location using information from multiple location and positioning technologies. A location may be determined by accepting location information from at least two sources using at least two location technologies, and adjusting the location information using at least one of confidence in the source, error range of the source, an error model for the source, and application-specific context information. To generate a final location, the adjusted locations are combined.

US 2007/0018811 A1 relates to a system for determining a location of an object. The system includes an object location tracker and a computer system. The object location tracker is configured for attachment to a mobile vehicle and includes an object identification reading device and a position-tracking device. The object identification reading device senses object identification indicia on the object as the mobile device moves around in an environment in which the object is situated. The positioning-tracking device computes the location of the object location tracker as the mobile vehicle moves throughout environment. The computer system associates the sensed object identification indicia of the object with a location in the environment based on the position of the object location tracker in the environment.

Therefore, it is an object of the present invention to provide an improvement for determining a current position of a navigation device, especially a current position of a navigation device installed in a vehicle.

### Summary of the Invention

This object is achieved by a method for determining a position of a navigation device as defined in claim 1 and a navigation device as defined in claim 6. The dependent claims define preferred and advantageous embodiments of the invention.

According to the present invention, a method for determining a position of a navigation device is provided. The navigation device is adapted to determine a position of the navigation device based on a plurality of different positioning procedures. According to the method, the plurality of different positioning procedures is provided and each positioning procedure works with a predefined parameter set. Furthermore, a plurality of geographical areas is provided and each geographical area is associated with one of the positioning procedures. However, one positioning procedure may be assigned to one or more geographical areas. Furthermore, an approximate position of the navigation device is determined. The approximate position may be determined for example based on a single positioning information source, for example a satellite based global positioning system or a mobile telecommunications network. The context of this invention, the approximate position may comprise a position which is determined with an accuracy of for example a few 100 meters. The required accuracy of the approximate position depends on a size of the provided geographical areas, as based on the approximate position one of the plurality of geographical areas in which the navigation device is located is determined. Therefore, the required accuracy of the approximate position may vary on the position of the navigation device. In case the accuracy of the approximate position is not high enough to uniquely identify one of the geographical areas, the whole method may be performed recursively starting with an assumed approximate position. Based on the determined geographical area the associated positioning procedure of the plurality of positioning procedures is selected and used for determining a more accurate position of the navigation device. The plurality of different positioning procedures may comprise different positioning algorithms and/or different predefined parameter sets to determine the position of the navigation device. Furthermore, the different positioning procedures may rely on the same algorithm and only the predefined parameter sets of the different positioning procedures may be varied. Thus, an improved positioning can be achieved for different geographical areas. By utilizing the knowledge of typical positioning problems of certain geographical areas in the positioning procedures an improved positioning can be provided with a positioning procedure adapted to this geographical area.

According to an embodiment, at least one parameter of the predefined parameter set defines a weighting for a positioning information source. The positioning information source provides a positioning information for the positioning procedure. The weighting defines a weight for scaling the positioning information from the positioning information source when the position of the navigation device is determined based on the positioning information of the positioning information source. For example, the positioning information sources may comprise a satellite based global positioning device, a steering angle sensor of a steering wheel of the vehicle, a tachometer sensor of the vehicle, an inclination angle sensor of the vehicle indicating for example if the vehicle is driving up or down a hill, a gyro sensor indicating a rotation of the vehicle body, a mobile communications network based positioning device providing positioning information from a radio based mobile communications network, or an electronic toll collect based positioning device providing an information of a position of an electronic toll collect bridge the vehicle is passing. When a plurality of the above-mentioned or further positioning information sources provide a positioning information, the plurality of positioning information may deviate from each other and may be thus contradicting. By weighting each of the positioning information delivered from the different positioning information sources, a reliability of each of the positioning information sources can be considered. As the weighting may be different for different geographical areas, each positioning information source can be appropriately considered for determining the position of the navigation device. For example, in areas where a satellite based global positioning information may be corrupted due to reflections in street canyons or may provide a poor reception quality, the weighting of the satellite based global positioning information may be low, whereas in other areas, where a good reception of the satellite based global positioning information is expected, the weighting may be high.

At least one parameter of the predefined parameter set defines, according to the invention, a lane width, a number of lanes, or a turning angle threshold to be used by the positioning procedure to determine the position of the navigation device. A lane width within one geographical area, for example a first city, may be different compared to a lane width of another geographical area, for example of a second city. Therefore, by adapting a lane width depending on the geographical area in which the navigation device is located, a current position or a deviation from a road can be determined more accurately. Furthermore, in some areas road branches typically may have small angles whereas in other areas road branches typically may have larger angles. Therefore, different turning angle thresholds may be used in different areas to determine if the vehicle is departing from a road at a road branch. For example, in areas with larger angles at road branches, the vehicle must turn significantly for a detection that the vehicle is exiting the road at the road branch. Furthermore, the turn angle threshold may be used to detect a lane change. In some areas a vehicle must turn significantly to detect a lane change, whereas in other areas also slight turns may be considered to detect a lane change.

The geographical areas may comprise for example an urban region, a rural region, a specific city, a mountainous region, a flat region, a specific country, a specific district area or a specific road. Furthermore, especially within large cities, different geographical areas may be defined within one city. For example for cities having a ring structure like Beijing, the geographical areas may be associated to the rings of the city or even to the ring roads itself.

According to an embodiment, the plurality of different positioning procedures comprises a default positioning procedure which is used to determine the position of the navigation device when no geographical area can be determined based on the approximate position of the navigation device. Thus, in case the approximate position cannot be determined or no specific positioning procedure is defined for the current geographical position, the default positioning procedure will be used.

According to the present invention, a navigation device is provided. The navigation device comprises a processing unit, a memory, and a positioning unit. The memory is adapted to store a plurality of positioning procedures. Each positioning procedure works on a predefined parameter set which is also stored in the memory. Furthermore, the memory is adapted to store a plurality of geographical areas and an association associating each of the geographical areas with one of the positioning procedures. Storing the plurality of geographical areas in the context of the present invention relates to storing geographical information describing the geographical area. For example, the geographical information of a geographical area may describe a contour of the geographical area. The positioning unit is adapted to determine an approximate position of the navigation device. The positioning unit may determine the approximate position of the navigation device for example based on an absolute positioning information provided for example by a satellite based global positioning system or a mobile communications network based positioning system, or the positioning unit may determine the approximate position based on a previously determined position of the navigation device and a relative change in position based on for example a steering angle sensor or a tachometer sensor of a vehicle, in which the navigation device is installed, or based on an acceleration sensor. The processing unit is adapted to determine a position of the navigation device based on the plurality of positioning procedures: The processing unit determines a geographical area in which the navigation device is located based on the approximate position of the navigation device and selects one of the plurality of positioning procedures based on the determined geographical area. Based on the selected positioning procedure, the position of the navigation device is finally determined more accurately.

The navigation device is adapted to perform the above described method and the embodiments thereof and comprises therefore also the above described advantages. The navigation device may comprise a mobile personal navigation device or a vehicle navigation device installed in a vehicle. The mobile personal navigation device may be a hand-held device which may be used inside or outside a vehicle. The navigation device of the vehicle may comprise a navigation device installed in the vehicle or may be part of an entertainment system or control system of the vehicle.

### Brief Description of the Drawings

Embodiments of the invention will now be described in more detail with reference to the accompanying drawings.
Fig. 1 shows a schematic view of a navigation device according to an embodiment of the present invention.
Fig. 2 shows a flow-chart comprising method steps according to an embodiment of the present invention.
Fig. 3 shows a plurality of geographical areas and associated positioning procedures.

### Detailed Description of Preferred Embodiments

In the following, exemplary embodiments of the present invention will be described in more detail. It has to be understood that the following description is given only for the purpose of illustrating the principles of the invention and is not to be taken in a limiting sense. Rather, the scope of the invention is defined only by the appended claims and not intended to be limited by the exemplary embodiments hereinafter.

It is to be understood that the features of the various exemplary embodiments described herein may be combined with each other, unless specifically noted otherwise. However, describing an embodiment with a plurality of features is not to be construed as indicating that all those features are necessary for practicing the present invention, as other embodiments may comprise less features and/or alternative features.

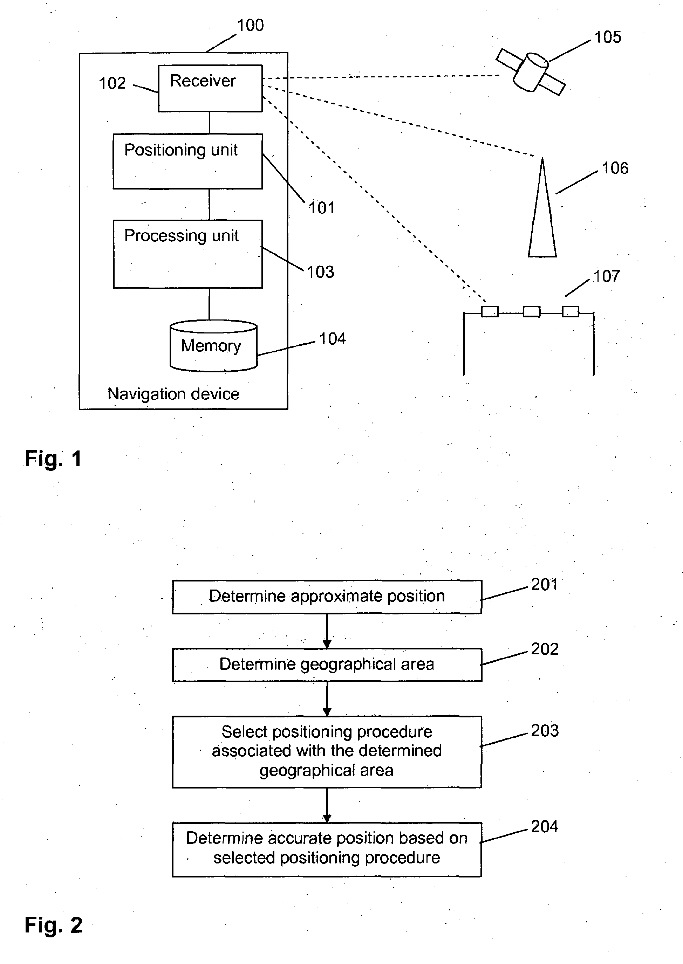

Fig. 1 shows a navigation device 100 comprising a positioning unit 101 connected to a receiver 102, a processing unit 103 and a memory 104. The navigation device 100 may comprise furthermore a display, a keypad, a loudspeaker and other components which are not shown for reasons of clarity. The receiver 102 may be adapted to receive positioning information from a satellite based positioning system 105, a mobile communications network based positioning system 106 and/or an electronic toll collect based positioning system 107. The positioning unit 101 may furthermore be coupled to sensors of a vehicle, in which the navigation device 100 is mounted. The sensors may comprise for example a tachometer sensor indicating a current speed of the vehicle or a distance the vehicle is moving, a steering angle sensor indicating a current steering angle of the vehicle, an inclination angle sensor indicating an inclination angle the vehicle is driving up or down, a gyro sensor indicating a rotation of the vehicle body and an acceleration sensor indicating a current acceleration of the vehicle.

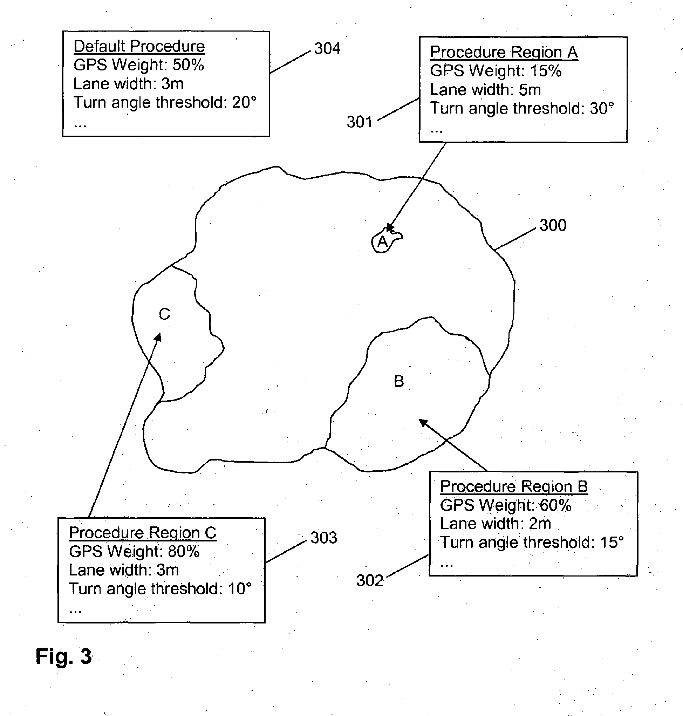

Operation of the navigation device 100 will now be described in more detail in connection with Figs. 2 and 3.

In step 201 a rough or approximate position of the navigation device 100 is determined. For example, the approximate position may be determined based on the satellite global positioning system (GPS) 105, the mobile communications system 106, the electronic toll collect system 107 when the vehicle is for example crossing a toll collect bridge, or may be determined based on a previously determined position and an offset determined based on a tachometer signal and/ or a steering angle signal of the vehicle or based on an acceleration sensor provided in the vehicle or the navigation device 100.

In step 202 the determined approximate position is used to determine in which geographical area the navigation system is located. For example, as shown in Fig. 3, a map of a routing area 300 of the navigation device 100, for example a country, a continent or the whole world, may provide specific geographical areas A, B and C. A lot more areas may be provided, but for reasons of clarity in Fig. 3 only three areas are indicated. Furthermore, some areas of the routing area 300 may not be assigned to a specific geographical area as indicated by the area having no area letter in Fig. 3. Thus, based on the determined approximate position, in step 202 it is determined if the navigation device is located in either region A, region B, region C or in none of the regions A-C. In step 203 a positioning procedure which is associated with the determined geographical area or region is selected. As indicated in Fig. 3, four positioning procedures 301 to 304 are provided. Positioning procedure 301 is associated with geographical area A, positioning procedure 302 is associated with geographical area B, and positioning procedure 303 is associated with geographical area C. The default positioning procedure 304 is provided and to be used for the remaining areas of the routing area 300. The positioning procedure may comprise a specific part of software which has to be used for determining the position of the navigation system or may comprise a specific parameter set which has to be used by a generic software. However, even a specific software and a specific parameter set may be used in combination. In step 204 an accurate position of the navigation device, which is more accurate than the approximate position, is determined based on the selected positioning procedure.

As shown in Fig. 3, when the vehicle is located for example in region A, the selected positioning procedure uses a GPS weight of 15%, assumes a lane width for this region of 5 meters and uses a turn angle threshold of 30°. Further parameters may be defined by the positioning procedures, for example, a weight for using positioning information of another satellite based positioning system, for example Galileo, a weight for using positioning information based on a mobile telecommunications network, or a weight for using positioning information based on an electronic toll collect system. Furthermore, a weight for an inclination angle sensor may be part of the positioning procedure. Based on the inclination angle it may be determined on which lane a vehicle is driving when two lanes are running close in parallel, one lane going up a hill and the other lane going down. Further, when driving on a toll road having toll collect bridges for monitoring vehicles and collecting toll, an accurate position of the vehicle can be determined when the vehicle is crossing a toll collect bridge. Furthermore, when two roads are running close in parallel, one road being a toll road and the other being a toll-free road, it may be determined based on the toll collect system if the vehicle is driving on the toll road or on the toll-free road.

When in step 202 no specific geographical area could be determined which means in the example of Fig. 3 that the vehicle is in none of the areas A-C, in step 203 the default positioning procedure 304 is selected for determining the exact position of the vehicle in step 204.

Thus, by using different positioning procedures and parameters in different areas, especially cities, knowledge about typical positioning problems in certain areas may be utilized to improve positioning. For example, in one city it may be a problem to correctly detect entrance and exit to roads having a lot of lanes, whereas in other cities it may be a problem to detect a correct position of a vehicle in bifurcations and overhead roundabouts. By considering a lane width, a number of lanes, a turn angle threshold and further parameters as stated above, positioning accuracy may be improved.

While exemplary embodiments have been described above, various modifications may be implemented in other embodiments. For example, a gyro sensor and an inclination angle sensor may be comprised by the navigation device 100 and thus an improved positioning may be accomplished also in a hand-held navigation device being used for walking or hiking or in a vehicle without being connected to sensors of the vehicle.

Finally, it is to be understood that all the embodiments described above are considered to be comprised by the present invention as it is defined by the appended claims. As already emphasized, the above described embodiments serve only as illustrative examples, and the scope of the present application is not limited to these embodiments, but it is intended to be limited only by the appended claims and equivalents thereof.

## Claims

1. A method for determining a position of a navigation device, the navigation device (100) being adapted to determine a position of the navigation device (100) based on a plurality of different positioning procedures (301-304), the method comprising the steps of:
- providing the plurality of different positioning procedures (301-304), each positioning procedure (301-304) working with a predefined parameter set,
- providing a plurality of geographical areas (A-C), each geographical area (A-C) being associated with one of the positioning procedures (301-304),
- determining an approximate position of the navigation device (100),
- determining a geographical area (A-C) in which the navigation device (100) is located from the plurality of geographical areas (A-C) based on the approximate position of the navigation device (100),
- selecting one of the plurality of positioning procedures (301-304) based on the determined geographical area (A-C), and
- determining the position of the navigation device (100) based on the selected positioning procedure (301-304),
**characterized in that** at least one parameter of the predefined parameter set defines at least one of a group comprising a lane width, a number of lanes, and a turning angle threshold associated to the roads of the plurality of geographical areas (A - C), said at least on parameter to be used by the positioning procedure (301-304) to determine the position of the navigation device (100).

2. The method according to claim 1, wherein at least one parameter of the predefined parameter set defines a weighting of a positioning information source (105-107) providing a positioning information for the positioning procedure, the weighting defining a weight for determining the position of the navigation device (100) based on the positioning information source (105-107).

3. The method according to claim 2, wherein the positioning information source (105-107) comprises at least one of a group consisting of a satellite based global positioning system (105), a steering angle sensor, a tachometer sensor, an inclination angle sensor, a gyro sensor, a mobile communications network based positioning system (106), and an electronic toll collect based positioning system (107).

4. The method according to any one of the preceding claims, wherein the geographical area (A-C) comprises at least one of a group consisting of an urban region, a rural region, a specific city, a mountainous region, a flat region, a specific country, a specific district area, and a specific road.

5. The method according to any one of the preceding claims, wherein the plurality of different positioning procedures (301-304) comprises a default positioning procedure (304), wherein, when no geographical area (A-C) can be determined based on the approximate position of the navigation device (100), the position of the navigation device (100) is determined based on the default positioning procedure (304).

6. A navigation device comprising:
- a processing unit (103) adapted to determine a position of the navigation device (100) based on a plurality of positioning procedures (301-304), each positioning procedure (301-304) working on a predefined parameter set,
- a memory (104) for storing the plurality of positioning procedures (301-304), the predefined parameter sets, and a plurality of geographical areas (A-C), each geographical area (A-C) being associated with one of the positioning procedures (301-304), and
- a positioning unit (101) adapted to determine an approximate position of the navigation device (100),
wherein the processing unit (103) is furthermore adapted to determine a geographical area (A-C) in which the navigation device (100) is located from the plurality of geographical areas (A-C) based on the approximate position of the navigation device (100), to select one of the plurality of positioning procedures (301-304) based on the determined geographical area (A-C), and to determine the position of the navigation device (100) based on the selected positioning procedure (301-304),
**characterized in that** at least one parameter of the predefined parameter set defines at least one of a group comprising a lane width, a number of lanes, and a turning angle threshold associated to the roads of the plurality of geographical areas (A-C), said at least one parameter to be used by the positioning procedure (301-304) to determine the position of the navigation device (100).

7. The navigation device according to claim 6, wherein the navigation device (100) is adapted to perform the method according to any one of claims 2-6.

8. The navigation device according to claim 6 or 7, wherein the navigation device (100) comprises a mobile personal navigation device or a vehicle navigation device.

## Patentansprüche

1. Verfahren zum Bestimmen einer Position eines Navigationsgerätes, wobei das Navigationsgerät (100) angepasst ist, um basierend auf einer Mehrzahl von verschiedenen Positionsbestimmungsprozeduren (301-304) eine Position des Navigationsgerätes (100) zu bestimmen, wobei das Verfahren folgende Schritte umfasst:
- Bereitstellen der Mehrzahl von verschiedenen Positionsbestimmungsprozeduren (301-304), wobei jede Positionsbestimmungsprozedur (301-304) mit einem vordefinierten Parametersatz arbeitet,
- Bereitstellen einer Mehrzahl von geografischen Bereichen (A-C), wobei jeder geografische Bereich (A-C) mit einer der Positionsbestimmungsprozeduren (301-304) verknüpft ist,
- Bestimmen einer ungefähren Position des Navigationsgerätes (100),
- Bestimmen eines geografischen Bereichs (A-C), in dem sich das Navigationsgerät (100) befindet, aus der Mehrzahl von geografischen Bereichen (A-C) basierend auf der ungefähren Position des Navigationsgerätes (100),
- Auswählen einer der Mehrzahl von Positionsbestimmungsprozeduren (301-304) basierend auf dem bestimmten geografischen Bereich (A-C) und
- Bestimmen der Position des Navigationsgerätes (100) basierend auf der ausgewählten Positionsbestimmungsprozedur (301-304),
**dadurch gekennzeichnet, dass** wenigstens ein Parameter des vordefinierten Parametersatzes wenigstens eins definiert aus einer Gruppe, die eine Fahrbahnbreite, eine Fahrbahnanzahl und einen Abbiegewinkelgrenzwert umfasst, die mit den Straßen der Mehrzahl von geografischen Bereichen (A-C) verknüpft sind, wobei der wenigstens eine Parameter von der Positionsbestimmungsprozedur (301-304) verwendet wird, um die Position des Navigationsgerätes (100) zu bestimmen.

2. Verfahren nach Anspruch 1, wobei der wenigstens eine Parameter des vordefinierten Parametersatzes eine Gewichtung einer Positionsbestimmungsinformationsquelle (105-107) definiert, die Positionsbestimmungsinformationen für die Positionsbestimmungsprozedur bereitstellt, wobei die Gewichtung ein Gewicht für das Bestimmen der Position des Navigationsgerätes (100) basierend auf der Positionsbestimmungsinformationsquelle (105-107) definiert.

3. Verfahren nach Anspruch 2, wobei die Positionsbestimmungsinformationsquelle (105-107) wenigstens eins umfasst aus einer Gruppe bestehend aus einem satelliteribasierten globalen Positionsbestimmungssystem (105), einem Lenkwinkelsensor, einem Geschwindigkeitsmessersensor, einem Neigungswinkelsensor, einem Gyroskopsensor, einem auf einem mobilen Kommunikationsnetzwerk basierenden Positionsbestimmungssystem (106) und einem auf elektronischer Mauterhebung basierenden Positionsbestimmungssystem (107).

4. Verfahren nach einem der vorangehenden Ansprüche, wobei der geografische Bereich (A-C) wenigstens eins umfasst aus einer Gruppe bestehend aus einer urbanen Gegend, einer ländlichen Gegend, einer bestimmten Stadt, einer bergigen Gegend, einer flachen Gegend, einem bestimmten Land, einer bestimmten Bezirksgegend und einer bestimmten Straße.

5. Verfahren nach einem der vorangehenden Ansprüche, wobei die Mehrzahl von verschiedenen Positionsbestimmungsprozeduren (301-304) eine Standardpositionsbestimmungsprozedur (304) umfasst, wobei die Position des Navigationsgerätes (100) basierend auf der Standardpositionsbestimmungsprozedur (304) bestimmt wird, wenn basierend auf der ungefähren Position des Navigationsgerätes (100) kein geografischer Bereich (A-C) bestimmt werden kann.

6. Navigationsgerät, das Folgendes umfasst:
- eine Prozessoreinheit (103), die angepasst ist, um eine Position des Navigationsgerätes (100) basierend auf einer Mehrzahl von Positionsbestimmungsprozeduren (301-304) zu bestimmen, wobei jede Positionsbestimmungsprozedur (301-304) mit einem vordefinierten Parametersatz arbeitet,
- einen Speicher (104) zum Speichern der Mehrzahl von Positionsbestimmungsprozeduren (301-304), der vordefinierten Parametersätze und einer Mehrzahl von geografischen Bereichen (A-C), wobei jeder geografische Bereich (A-C) mit einer der Positionsbestimmungsprozeduren (301-304) verknüpft ist, und
- eine Positionsbestimmungseinheit (101), die angepasst ist, um eine ungefähre Position des Navigationsgerätes (100) zu bestimmen,
wobei die Prozessoreinheit (103) ferner angepasst ist, um basierend auf der ungefähren Position des Navigationsgerätes (100) einen geografischen Bereich (A-C), in dem sich das Navigationsgerät (100) befindet, aus der Mehrzahl von geografischen Bereichen (A-C) zu bestimmen, um basierend auf dem bestimmten geografischen Bereich (A-C) eine aus der Mehrzahl von Positionsbestimmungsprozeduren (301-304) auszuwählen, und um die Position des Navigationsgerätes (100) basierend auf der ausgewählten Positionsbestimmungsprozedur (301-304) zu bestimmen,
**dadurch gekennzeichnet, dass** wenigstens ein Parameter des vordefinierten Parametersatzes wenigstens eins definiert aus einer Gruppe, die eine Fahrbahnbreite, eine Fahrbahnanzahl und einen Abbiegewinkelgrenzwert umfasst, die mit den Straßen der Mehrzahl von geografischen Bereichen (A-C) verknüpft sind, wobei der wenigstens eine Parameter von der Positionsbestimmungsprozedur (301-304) verwendet wird, um die Position des Navigationsgerätes (100) zu bestimmen.

7. Navigationsgerät nach Anspruch 6, wobei das Navigationsgerät (100) angepasst ist, um das Verfahren nach einem der Ansprüche 2-6 auszuführen.

8. Navigationsgerät nach Anspruch 6 oder 7, wobei das Navigationsgerät (100) ein mobiles persönliches Navigationsgerät oder ein Fahrzeugnavigationsgerät umfasst.

## Revendications

1. Procédé de détermination d'une position d'un dispositif de navigation, le dispositif de navigation (100) étant adapté pour déterminer une position du dispositif de navigation (100) sur la base d'une pluralité de différentes procédures de positionnement (301-304), le procédé comprenant les étapes suivantes :
- la fourniture de la pluralité de différentes procédures de positionnement (301-304), chaque procédure de positionnement (301-304) travaillant avec un ensemble de paramètres prédéfinis,
- la fourniture d'une pluralité de zones géographiques (A-C), chaque zone géographique (A-C) étant associée à l'une des procédures de positionnement (301-304),
- la détermination d'une position approximative du dispositif de navigation (100),
- la détermination d'une zone géographique (A-C), dans laquelle le dispositif de navigation (100) est situé, à partir de la pluralité de zones géographiques (A-C) sur la base de la position approximative du dispositif de navigation (100),
- la sélection de l'une de la pluralité de procédures de positionnement (301-304) sur la base de la zone géométrique déterminée (A-C), et
- la détermination de la position du dispositif de navigation (100) sur la base de la procédure de positionnement sélectionnée (301-304),
**caractérisé en ce qu'**au moins un paramètre de l'ensemble de paramètres prédéfinis définit au moins un élément d'un groupe comprenant une largeur de voie, un nombre de voies, et un seuil d'angle de rotation associé aux routes de la pluralité de zones géométriques (A-C), ledit au moins un paramètre devant être utilisé par la procédure de positionnement (301-304) pour déterminer la position du dispositif de navigation (100).

2. Procédé selon la revendication 1, dans lequel au moins un paramètre de l'ensemble de paramètres prédéfinis définit une pondération d'une source d'information de positionnement (105-107) fournissant une information de positionnement pour la procédure de positionnement, la pondération définissant une valeur pondérée pour la détermination de la position du dispositif de navigation (100) sur la base de la source d'information de positionnement (105-107).

3. Procédé selon la revendication 2, dans lequel la source d'information de positionnement (105-107) comprend au moins un élément d'un groupe composé d'un système de positionnement global par satellite (105), d'un capteur d'angle de direction, d'un capteur tachymétrique, d'un capteur d'angle d'inclinaison, d'un capteur gyroscopique, d'un système de positionnement basé sur les réseaux de communications mobiles (106) et d'un système de positionnement basé sur la perception des péages électroniques (107).

4. Procédé selon l'une quelconque des revendications précédentes, dans lequel la zone géographique (A-C) comprend au moins un élément d'un groupe composé d'une région urbaine, d'une région rurale, d'une ville spécifique, d'une région montagneuse, d'une région plate, d'un pays spécifique, d'un secteur spécifique et d'une route spécifique.

5. Procédé selon l'une quelconque des revendications précédentes, dans lequel la pluralité de différentes procédures de positionnement (301-304) comprend une procédure de positionnement par défaut (304), dans lequel lorsqu'aucune zone géographique (A-C) ne peut être déterminée sur la base de la position approximative du dispositif de navigation (100), la position du dispositif de navigation (100) est déterminée sur la base de la procédure de positionnement par défaut (304).

6. Dispositif de navigation comprenant :
- une unité de traitement (103) adaptée pour déterminer une position du dispositif de navigation (100) sur la base d'une pluralité de procédures de positionnement (301-304), chaque procédure de positionnement (301-304) travaillant sur un ensemble de paramètres prédéfinis,
- une mémoire (104) pour l'enregistrement de la pluralité de procédures de positionnement (301-304), des ensembles de paramètres prédéfinis et d'une pluralité de zones géographiques (A-C), chaque zone géographique (A-C) étant associée à l'une des procédures de positionnement (301-304) et
- une unité de positionnement (101) adaptée pour déterminer une position approximative du dispositif de navigation (100),
dans lequel l'unité de traitement (103) est de plus adaptée pour déterminer une zone géographique (A-C), dans laquelle le dispositif de navigation (100) est situé, à partir de la pluralité de zones géographiques (A-C) sur la base de la position approximative du dispositif de navigation (100) pour sélectionner l'une de la pluralité de procédures de positionnement (301-304) sur la base de la zone géographique déterminée (A-C) et pour déterminer la position du dispositif de navigation (100) sur la base de la procédure de positionnement sélectionnée (301-304),
**caractérisé en ce qu'**au moins un paramètre de l'ensemble de paramètres prédéfinis définit au moins un élément d'un groupe comprenant une largeur de voie, un nombre de voies, et un seuil d'angle de rotation associé aux routes de la pluralité de zones géographiques (A-C), ledit au moins un paramètre devant être utilisé par la procédure de positionnement (301-304) pour déterminer la position du dispositif de navigation (100).

7. Dispositif de navigation selon la revendication 6, dans lequel le dispositif de navigation (100) est adapté pour réaliser le procédé selon l'une quelconque des revendications 2 à 6.

8. Dispositif de navigation selon la revendication 6 ou 7, dans lequel le dispositif de navigation (100) comprend un dispositif de navigation personnel mobile ou un dispositif de navigation de véhicule.
